# EUROPEAN PATENT SPECIFICATION

(11) **EP 2 708 426 B1**
(45) Date of publication and mention of the grant of the patent: **26.06.2019**
(21) Application number: 12800401.7
(22) Date of filing: 23.05.2012
(51) Int. Cl.: B60S 1/52, B05B 1/10, F15C 1/22

(54) **WASHER NOZZLE AND METHOD FOR MANUFACTURING SAME**
WASCHDÜSE UND HERSTELLUNGSVERFAHREN DAFÜR
GICLEUR DE LAVE-GLACE ET PROCÉDÉ DE FABRICATION DE CELUI-CI

(30) Priority: 17.06.2011 JP 2011135013
(43) Date of publication of application: 19.03.2014
(73) Proprietor: Mitsuba Corporation, Kiryu-shi, Gunma 376-8555 (JP)
(72) Inventor: NISHIO, Kentarou, Kiryu-shi Gunma 376-8555 (JP)
(74) Representative: Manitz Finsterwald Patent- und Rechtsanwaltspartnerschaft mbB
(86) International application number: PCT/JP2012/063187
(87) International publication number: WO 2012/172943

(56) References cited:
- DE-U1- 8 309 690
- JP-A- 2002 067 887
- JP-A- 2005 199 193
- JP-A- 2009 227 209
- JP-A- 2009 227 209
- JP-A- 2013 001 246
- US-A1- 2004 227 021

## Description

### TECHNICAL FIELD

The present invention relates to a washer nozzle provided with a nozzle that jets a washer fluid toward a surface to be washed and with a nozzle holding member that holds the nozzle, and a manufacturing method of the washer nozzle.

### BACKGROUNDART

Conventionally, a vehicle, such as an automobile, is equipped with a washer device that removes dirt, such as dust, from the surface of a windshield (surface to be washed). The washer device has a pump that is actuated by operating a wiper switch disposed in a vehicle compartment, etc. The pump operates to jet a washer solution (washer fluid) out of a washer tank toward the surface to be washed through a hose and a washer nozzle. As the washer fluid is jet out, a wiper blade is reciprocated to make a wiping action. Hence dirt sticking to the surface to be washed is removed.

The washer nozzle has a nozzle that jets the washer fluid, and a so-called spread-type nozzle capable of spreading the washer fluid across a wide area of the surface to be washed is known as such a nozzle. This spread-type nozzle makes it possible to efficiently wash the surface to be washed using a small amount of the washer fluid. For example, techniques described in Patent Documents 1 and 2 are known as techniques related to such a spread-type nozzle.

A nozzle (jet-direction-variable spread nozzle) described in Patent Document 1 includes a lower oscillating nozzle having therein a supply port, an inner channel, a feedback channel, and a jet port, and a tabular upper lid nozzle closing the lower oscillating nozzle. The upper lid nozzle is superposed on the lower oscillating nozzle to close its channels, and both nozzles are joined together by a joining means, such as welding.

A nozzle described in Patent Document 2 includes a first split body and a second split body which have therein liquid inlet portions, liquid jet portions, and self-vibrating channels and are formed into the same shape (hemisphere). Both split bodies are abutted against each other on their sides where the channels, etc. are formed, and a molten resin is supplied to a slot formed on the periphery of abutting surfaces to join both split bodies together. Additionally, as another example, Patent Documents 3 to 5 each discloses a nozzle.
Patent Document 1: Japanese Patent Application Laid-Open Publication No. 2002-067887 (FIG. 1).
Patent Document 2: Japanese Patent Application Laid-Open Publication No. 2009-227209 (FIG. 3).
Patent Document 3: Japanese Patent Application Laid-Open Publication No. 2013-001246.
Patent Document 4: United States Patent Application Publication No. US2004/227021A1.
Patent Document 5: German Utility Model Application Publication No. DE8309690U1.

### DISCLOSURE OF THE INVENTION

According to the nozzles described in the above-explained Patent Documents 1 and 2, the planes of two members making up the nozzle (lower oscillating nozzle and upper oscillating nozzle/first split body and second split body) are abutted against each other and then both members are joined together by the joining means, such as welding. When the pressure of a washer fluid flowing through the nozzle is high, therefore, a gap may be formed between both members because both members, which are welded together on their planes in contact with each other, have joining strength that is not sufficient enough. When a gap is formed between the two members and it reduces their sealing performance, giving accurate self-vibration to the washer fluid becomes impossible. This poses such a problem that the spreading area of the washer fluid becomes irregular.

The object of the present invention is to provide a washer nozzle that enhances the sealing performance of two members making up a nozzle, thereby suppresses the irregularity of a spreading range and to provide a manufacturing method of the washer nozzle.

A washer nozzle of the present invention has the features of claim 1.

In the washer nozzle according to a further embodiment of the present invention, the sealing portion is continuously formed along a periphery of the nozzle.

A manufacturing method of a washer nozzle of the present invention is a manufacturing method of a washer nozzle according to claim 3.

In the manufacturing method of the washer nozzle according to a further embodiment of the present invention, the sealing portion is continuously formed along a periphery of the nozzle.

### Effects of the Invention

According to the present invention, the washer nozzle includes a first nozzle body including a fitting recess having a bottom portion and a side wall; a second nozzle body having an opposed wall facing the side wall, the second nozzle body being fitted in the fitting recess; a channel formed between the bottom portion of the first nozzle body and one of two ends of the second nozzle body across the opposed wall, the channel allowing the washer fluid to flow therethrough; and a sealing portion formed between an opening-side of the fitting recess of the first nozzle body and the other one of the two ends of the second body across the opposed wall, the sealing portion sealing a gap between the first nozzle body and the second nozzle body. In this configuration, the nozzle bodies can be fitted together by concave-convex (male-female) fitting such that the side wall and the opposed wall are closely attached (contacted) with an insertion margin. This enhances the joining strength of both nozzle bodies and suppresses the deformation of both nozzle bodies caused by the pressure of the washer fluid. Hence the sealing performance is improved and the irregularity of the spreading range of the washer fluid is suppressed. The channels formed inside the nozzle and the sealing portion sealing the nozzle bodies together are separated from each other via the side wall (opposed wall). As a result, the deformation of the nozzle bodies occurring near the channels is hardly transmitted to the sealing portion, so that the sealing performance is maintained for a long period.

According to the present invention, the sealing portion is formed continuously along the periphery of the nozzle. For example, the sealing portion can be formed into an annual shape. As a result, for example, the strength of the sealing portion is enhanced, as compared to a case of a nozzle having two sealing portions separated from each other, and therefore the sealing performance is further improved.

### BRIEF DESCRIPTIONS OF THE DRAWINGS

FIG. 1 is a diagram showing part of a vehicle equipped with a washer nozzle according to the present invention;
FIG. 2 is an enlarged perspective view of the washer nozzle of FIG. 1;
FIG. 3 is a sectional view of the washer nozzle of FIG. 2;
FIGs. 4A and 4B are enlarged perspective views of a single nozzle;
FIG. 5 is an exploded perspective view of the nozzle of FIGs. 4A and 4B;
FIGs. 6A and 6B are explanatory diagrams for explaining a sealing process of sealing the nozzle; and
FIGs. 7A and 7B are perspective views of a second nozzle body according to a second embodiment;
FIG 8 is an enlarged perspective view of a washer nozzle according to a third embodiment, which is not part of the invention ;
FIG 9 is a sectional view of the washer nozzle of FIG 8;
FIG 10 is an enlarged perspective view of a single nozzle of FIG 9;
FIG 11 is an exploded perspective view of the nozzle of FIG 10 seen from below;
FIG 12 is an exploded perspective view of the nozzle of FIG 10 seen from above;
FIGs. 13A and 13B are explanatory diagrams for explaining a bonding process of bonding the nozzle of FIG 10; and
FIG 14 is a perspective view of a partition member of a nozzle according to a fourth embodiment, which is not part of the invention.

### BEST MODE FOR CARRYING OUT THE INVENTION

Hereinafter, a first embodiment of the present invention will be described in detail referring to the drawings.

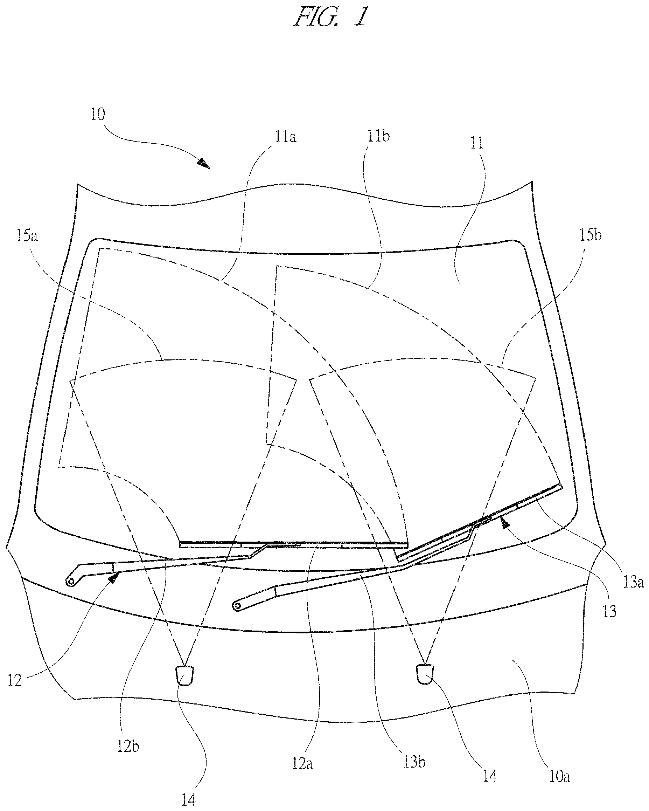

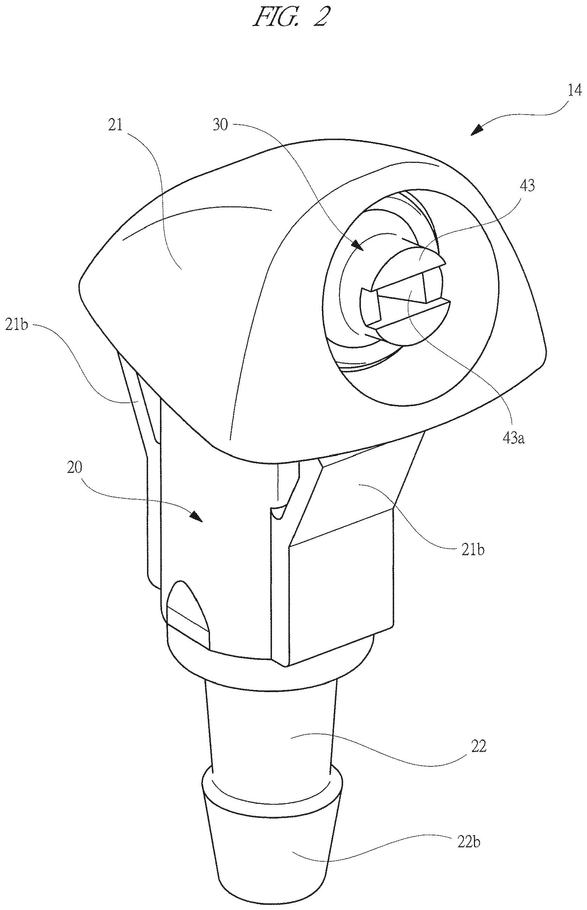

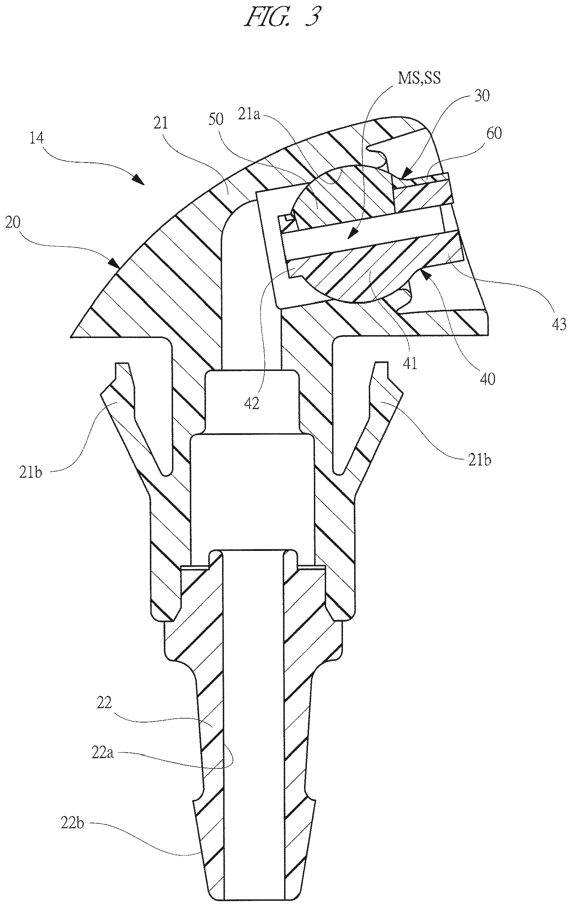

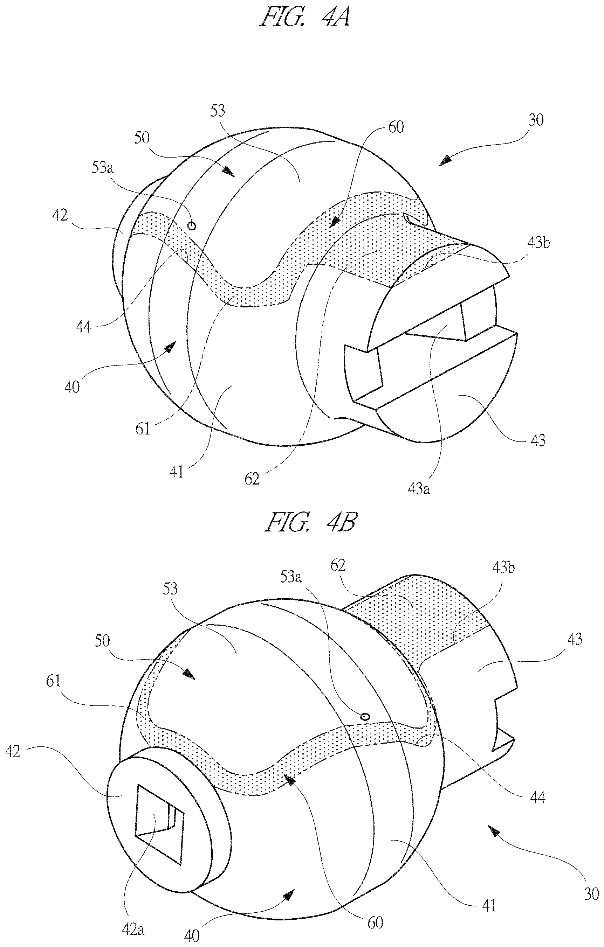

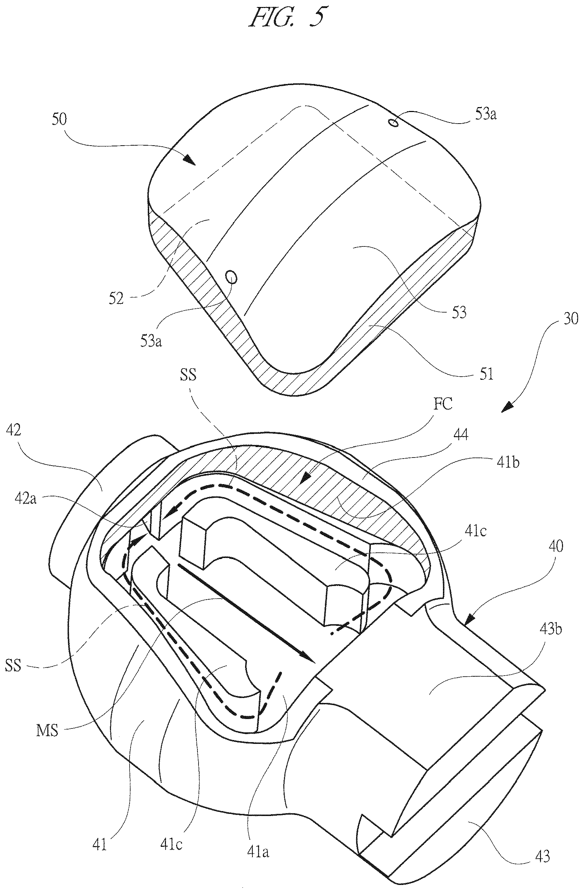

FIG 1 is a diagram showing part of a vehicle equipped with a washer nozzle according to the present invention, FIG 2 is an enlarged perspective view of the washer nozzle of FIG 1, FIG 3 is a sectional view of the washer nozzle of FIG 2, FIGs. 4A and 4B are enlarged perspective views of a single nozzle, and FIG 5 is an exploded perspective view of the nozzle of FIGs. 4A and 4B.

As shown in FIG 1, a vehicle 10, such as automobile, has a front glass (surface to be washed) 11, i.e., wind shield, provided on the front side of the vehicle 10. A DR-side (driver's seat side) wiper member 12 and an AS-side (assistant driver's seat side) wiper member 13 are swingably provided on the front glass 11.

The DR-side wiper member 12 has a DR-side wiper blade 12a and a DR-side wiper arm 12b. The DR-side wiper blade 12a is rotatably attached to the front end of the DR-side wiper arm 12b. The AS-side wiper member 13 has an AS-side wiper blade 13a and an AS-side wiper arm 13b. The AS-side wiper blade 13a is rotatably attached to the front end of the AS-side wiper arm 13b.

On the base end of each of the wiper arms 12b and 13b, a link mechanism (not illustrated) is disposed, which converts the rotary motion of a wiper motor (not illustrated) into a swinging motion. When the wiper motor is driven to rotate, the wiper blades 12a and 13a reciprocate to make wiping actions in wiping areas 11a and 11b on the front glass 11, respectively.

A hood 10a is disposed on the front side of the vehicle 10. On a part of the hood 10a close to the front glass 11, a pair of washer nozzles 14 is attached. One end of a hose (not illustrated) is connected to each of the washer nozzles 14, while the other end of the hose is connected to a washer tank (not illustrated) via a pump (not illustrated). Each washer nozzle 14 is a so-called spread-type washer nozzle. By switching on a wiper switch (not illustrated), the washer nozzle 14 is caused to jet a washer solution (washer fluid) toward relatively wide jet areas 15a and 15b on the front glass 11.

Each washer nozzle 14 has the same configuration, and, as shown in FIGs. 2 and 3, is provided with a nozzle holding member 20 and a nozzle 30 that are molded out of a resin material, such as plastic, into given shapes.

The nozzle holding member 20 has a head 21 and a leg 22, which are fixed together into an integral structure. The head 21 has a mounting recess 21a which is open toward the front glass 11 when the washer nozzle 14 is fixed to the hood 10a (see FIG. 1) and in which the nozzle 30 is fitted. The interior of the mounting recess 21a is formed into a spherical shape so that the spherical nozzle 30 is rotatably held in the recess 21a.

The leg 22 is formed into a cylindrical shape, and a flow channel 22a through which the washer solution flows is formed inside the leg 22. One end of the flow channel 22a (upper side in FIG 3) is connected to the mounting recess 21a of the head 21. The washer solution flowing through the flow channel 22a is lead to the nozzle 30 mounted to the mounting recess 21a.

On the other end of the leg 22 (lower side in FIG 3), a tapered shoulder 22b, to which one end of a hose is connected, is formed integrally. The tapered shoulder 22b prevents the hose from slipping off. On a part of the head 21 closer to the leg 22, a pair of engaging claws 21b are formed integrally. The engaging claws 21b are elastically deformed and are inserted through mounting holes (not illustrated) on the hood 10a to fix the nozzle holding member 20 (washer nozzle 14) to the hood 10a.

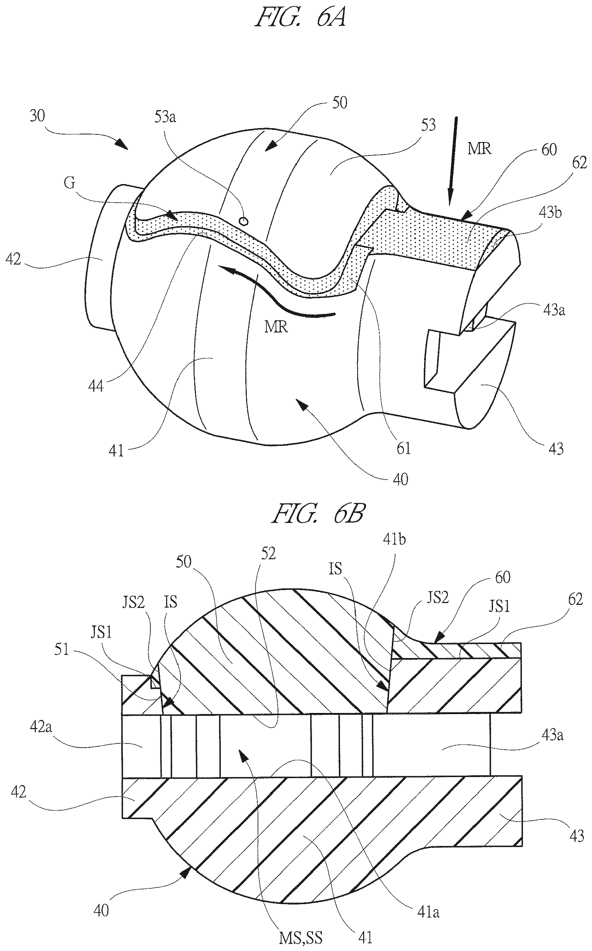

As shown in FIGs. 4A, 4B and 5, the nozzle 30 has a first nozzle body 40 and a second nozzle body 50 between which a sealing portion 60 (shaded portion in FIGs. 4A and 4B) is formed by curing a molten resin MR (see FIGs. 6A and 6B). Each of the nozzle bodies 40 and 50 and the sealing portion 60 is molded out of a resin material, such as plastic, into a given shape.

The nozzle 30 is formed into a spherical shape by joining the nozzle bodies 40 and 50 together by the sealing portion 60. As shown in FIG 3, the nozzle 30 formed into a spherical shape is pushed with a predetermined pressure toward the mounting recess 21a and is fitted therein. The nozzle 30 fitted in the mounting recess 21a can be rotated therein. Through this rotation, the tilt angle of the nozzle 30 against the nozzle holing member 20 is adjusted, that is, the jet position of the nozzle 30 for jetting the washer solution onto the front glass 11 (see FIG 1) is adjusted.

The first nozzle body 40 has a spherical main body 41 having a radius of curvature determined to be identical with the radius of curvature of the mounting recess 21a, an inlet-side projection 42 projecting from the spherical main body 41, and a jet-side projection 43 projecting opposite to the inlet-side projection 42 from the spherical main body 41.

As shown in FIG 5, the spherical main body 41 has a bottom portion 41a, around which a side wall 41b (hatched line portion in FIG 5) is formed to encircle the bottom portion 41a. The bottom portion 41a and the side wall 41b jointly form a fitting recess FC in which the second nozzle body 50 is fitted. On the bottom portion 41a, a pair of channel-forming projections 41c are formed integrally, which extend from the inlet-side projection 42 toward the jet-side projection 43. The channel-forming projections 41c form a main channel (passage) MS indicated by a continuous line arrow in FIG 5 and a pair of subchannels (passages) SS indicated by broken lines in FIG 5.

The inlet-side projection 42 is located inside the head 21 forming the nozzle holding member 20, that is, located on the upstream side of the channels MS and SS (see FIG 3). The inlet-side projection 42 is formed into a substantially cylindrical shape and has an inlet port 42a located radially inside the inlet-side projection 42. The inlet port 42a has an opening area on its entrance side determined to be larger than an opening area on its exit side, so that a flow of the washer solution is squeezed at the exit side of the inlet port 42a. In other words, the inlet port 42a increases the flow velocity of the washer solution heading toward each of the channels MS and SS.

The jet-side projection 43 is located outside the head 21 making up the nozzle holding member 20, that is, located on the downstream side of the channels MS and SS (see FIG. 3), and is directed toward the front glass 11. The jet-side projection 43 is formed into a substantially cylindrical shape and has a jet port 43a located radially inside the jet-side projection 43. The jet-side projection 43 has an opening area on its entrance side determined to be smaller than an opening area on its exit side (not illustrated in detail), so that a flow of the washer solution is squeezed at the entrance side of the jet port 43a. In other words, the jet port 43a increases the flow velocity of the washer solution jetted toward the front glass 11.

The second nozzle body 50 is formed into a shape that can be fitted in the fitting recess FC of the first nozzle body 40. On the periphery of the second nozzle body 50, a close-contact wall 51 (hatched line portion in FIG 5) is formed as an opposed wall When the second nozzle body 50 is fitted in the fitting recess FC, the close-contact wall 51 comes into contact with the side wall 41b forming the fitting recess FC. By contacting the close-contact wall 51 and the side wall 41b closely together, the interior and exterior of the nozzle 30 are hermetically sealed. This prevents the washer solution flowing through the channels MS and SS from leaking out of the nozzle 30.

One end of the second nozzle body 50 opposite to the other end of the same across the close-contact wall 51, Le., the back face (far side in FIG 5) of the second nozzle body 50 of FIG 5 is formed as an abutting plane 52. This abutting plane 52 sticks closely to the front side (this side in FIG 5) of the channel-forming projections 41c without creating any gap when the second nozzle 50 is fitted in the fitting recess FC. In this manner, the channels MS and SS are located between the bottom portion 41a of the first nozzle body 40 and the abutting plane 52 of the second nozzle body 50.

The other end of the second nozzle body 50 opposite to the one end across the close-contact wall 51, Le., the front face (this side in FIG 5) of the second nozzle body 50 of FIG 5 is formed as a spherical surface 53. Hence, when the second nozzle 50 is fitted in the fitting recess FC, the second nozzle body 50 and the first nozzle body 40 are joined together to form a sphere.

On the spherical surface 53 of the second nozzle body 50, a pair of jig-mounting recesses 53a is formed. The front end of a gripping jig (not illustrated) of an automatic assembling apparatus, etc., is engage with the jig-mounting recesses 53a. That is, as the second nozzle body 50 is being gripped by the gripping jig, while the second nozzle body 50 is being transferred to the first nozzle body 40, the second nozzle body 50 is fitted in the fitting recess FC.

As indicated by the shaded portion of FIGs. 4A and 4B, the sealing portion 60 is formed between an edge portion 44 formed on the opening side (upper side in FIGs. 4A and 4B) of the fitting recess FC of the first nozzle body 40 and the other end of the second nozzle body 50 opposite to the one end across the close-contact wall 51, Le., the spherical surface 53. The sealing portion 60 has a bonding function of bonding the nozzle bodies 40 and 50 together and a sealing function of sealing the nozzle bodies 40 and 50 together. The sealing portion 60 is formed into a predetermined shape as the molten resin MR (see FIGs. 6A and 6B) led in between the edge portion 44 and the spherical surface 53 is cured.

The sealing portion 60 has an annular main body 61 and a padding portion 62. The annular main body 61 is closer to the second nozzle body 50 with respect to the inlet port 42a, the channels MS and SS, and the jet port 43a and is formed continuously along the periphery of the nozzle 30 into a substantially annular shape. The padding portion 62 is integrally provided with the annular main body 61 on the jet-side projection 43 side, and has a section of a substantially circular arc shape so that the padding portion 62 covers a gate plane portion 43b formed on the jet-side projection 43.

A gate (molten resin supply port) formed on a die (not illustrated) that is use when the sealing portion 60 is molded (when the nozzle bodies 40 and 50 are bonded) faces the gate plane portion 43b. This causes the supplied molten resin MR from the gate to flow along the gate plain surface 43b and into a gap between the edge portion 44 and the spherical surface 53.

Next, the self-vibration action of the nozzle 30, Le., washer-solution spreading action by the channels MS and SS will be described.

The washer solution flowing through the inlet port 42a into the nozzle 30 is split into a flow of the solution heading for the main channel MS indicated by a solid line arrow in FIG 5 and flows of the solution heading for the subchannels SS indicated by broken line arrows in FIG 5. The split flows of the solution in the subchannels SS make a turn at the jet port 43a to travel back to the inlet port 42a and rejoin the flow of the solution in the main channel MS. In this manner, the flows of the solution in the subchannels SS are joined to the flow of the solution in the main channel MS, as feedback flows. This causes the washer solution jetted out of the jet port 43a to vibrate. As a result, the washer solution jetted out of the jet port 43a toward the front glass 11 spreads across a wide area.

Next, a manufacturing method of the washer nozzle 14 formed in the above manner will be described in detail, referring to the drawings.

FIG 6A and 6B are explanatory diagrams for explaining a sealing process of sealing the nozzle.

### [Component Molding Process]

As shown in FIG 5, the first nozzle body 40 and the second nozzle body 50 (components) are molded first. In the process of molding the nozzle bodies 40 and 50, given dies (not illustrated) corresponding respectively to the nozzle bodies 40 and 50 are used and a molten resin is injected into the dies to mold the nozzle bodies 40 and 50 of given shapes (injection molding).

### [Fitting Process]

Subsequently, the first nozzle body 40 and the second nozzle body 50 molded by the component molding process are prepared, and the second nozzle body 50 is fitted into the fitting recess FC of the first nozzle body 40. At this time, the side wall 41b of the first nozzle body 40 is closely attached to the close-contact wall 51 of the second nozzle body 50 while the abutting plane 52 of the second nozzle body 50 is closely attached to the front end side of the channel-forming projections 41c of the first nozzle body 40. In this manner, the nozzle bodies 40 and 50 are fitted together, making the channels MS and SS between the bottom portion 41a and the abutting plane 52, as shown in FIG 6B. This fitting process is performed by engaging the gripping jig of the automatic assembling apparatus, etc., with the jig-mounting recesses 53a and controlling the gripping jig to move the second nozzle body 50.

Following the above-described fitting process, as shown in FIG. 6A, a continuous, substantially annular slot G is formed along the periphery of the nozzle 30 between the nozzle body 40 and the nozzle body 50 (edge portion 44 and spherical surface 53).

### [Sealing Process]

Subsequently, the hot molten resin (sealing member) MR is supplied by a predetermined pressure from the gate of the die (not illustrated) into the substantially annular slot G formed by the fitting process, as indicated by a heavy line arrow. This causes the molten resin MR proceeding along the gate plane portion 43b to reach every part of the slot G, thus melting the part of nozzle bodies 40 and 50 in contact with the molten resin MR. As a result, the peripheries of the nozzle bodies 40 and 50 in contact with the molten resin MR are systematically joined together via the molten resin MR. Hence the sealing portion 60 (annular main body 61 and padding portion 62) is formed between the nozzle body 40 and the nozzle body 50. The nozzle body 40 and the nozzle body 50 are thus firmly bonded to each other, which gives the completed form of the nozzle 30, as shown in FIGs. 4A and 4B.

Here, as shown in FIG 6B, as a result of fitting the first and second nozzle bodies 40 and 50 together by non-level joining, an insertion margin IS is formed between the side wall 41b and the close-contact wall 51. Because of this insertion margin IS, a first sealed portion JS1 where the first nozzle body 40 and the sealing portion 60 are in contact with each other and a second sealed portion JS2 where the second nozzle body 50 and the sealing portion 60 are in contact with each other are separated from the channels MS and SS. In addition, as a result of fitting the first and second nozzle bodies 40 and 50 together by non-level joining, the second nozzle body 50 is provided as a thick-walled body with high rigidity so that it is hardly deformed.

### [Mounting Process]

Subsequently, the nozzle 30 completed by the sealing process is prepared and the nozzle holding member 20 assembled by a separate process is also prepared. As shown in FIG 3, the nozzle 30 is pushed with a predetermined pressure to fit (mount) it in the mounting recess 21a of the nozzle holding member 20. The nozzle 30 is fitted in such that the jet port 43a is directed to the opening of the mounting recess 21a. At the same time, the position of the nozzle 30 relative to the nozzle holding member 20 is adjusted so that the first nozzle body 40 is located on the lower side (closer to the leg 22) in FIG 3. In this manner, the washer nozzle 14 is completed. However, the position of the nozzle 30 may be adjusted so that the second nozzle body 50 is located on the lower side in FIG 3. What is required is to set the jet port 43a in a horizontally elongated open state along the horizontal direction of the front glass 11, as shown in FIG 2.

As described above, according to the first embodiment, the nozzle includes the first nozzle body 40 provided with the fitting recess FC having the bottom portion 41a and the side wall 41b, the second nozzle body 50 that has the close-contact wall 51 in a close contact with the side wall 41b and that is fitted in the fitting recess FC, the channels MS and SS that are formed between the bottom portion 41a of the first nozzle body 40 and the abutting plane 52 on the one end of the second nozzle body 50 opposite to the other end across the close-contact wall 51 and that allows the washer fluid to flow through the channels MS and SS; and the sealing portion 60 that is formed between the edge portion 44 on the opening-side of the fitting recess FC of the first nozzle body 40 and the spherical surface 53 on the other end of the second nozzle body 50 opposite to the one end across the close-contact wall 51 and that seals a gap between the first nozzle body 40 and the second nozzle body 50.

In this manner, the nozzle bodies 40 and 50 are fitted together by non-level joining, by attaching the side wall 41b and close-contact wall 51 closely together with the insertion margin IS formed therebetween. This thus enhances the bonding strength of both nozzle bodies, thereby suppressing the deformation of both nozzle bodies caused by the pressure of the washer solution. Hence the sealing performance is improved and the irregularity of the spreading area of the washer solution is suppressed. Because the channels MS and SS formed in the nozzle 30 are separated from the sealing portion 60 sealing the nozzle bodies 40 and 50 together, via the side wall 41b (contact wall 51), making it harder to transmit the deformation of the nozzle bodies 40 and 50 near the channels MS and SS to the sealing portion 60. As a result, the sealing performance is maintained for a long period.

Further, according to the first embodiment, the sealing portion 60 is formed as the continuous, substantially annular sealing portion extending along the periphery of the nozzle 30. As a result, for example, the strength of the sealing portion is enhanced, compared to a case of a nozzle having two sealing portions separated from each other, and therefore the sealing performance is further improved.

A second embodiment, which is not part of the present invention, will then be described in detail, referring to the drawings. The components same as the components described in the first embodiment in terms of function are denoted by the same reference numerals and are omitted in further description.

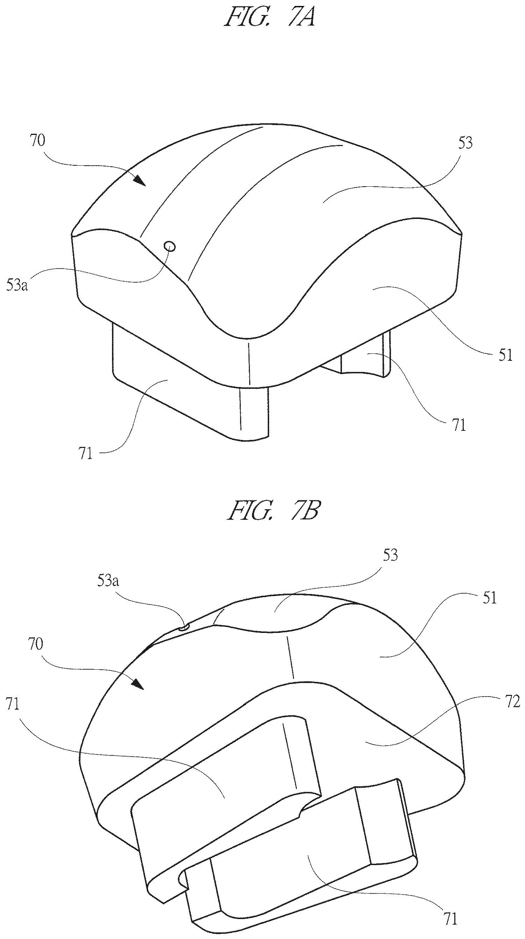

FIG 7A and 7B are perspective views of a second nozzle body according to the second embodiment

The second embodiment is different from the first embodiment in that the channel-forming projections 41c formed integrally on the first nozzle body 40 (see FIG 5) are omitted and that, as shown in FIGs. 7A and 7B, channel-forming projections 71 identical in shape with the channel-forming projections 41c are formed integrally on a plane portion 72 on one end of a second nozzle body 70 opposite to the other end of the same across the close-contact wall 51. The channel-forming projections 71 extend into the first nozzle body 40, thereby allowing their front ends to stick closely to the bottom portion 41a of the first nozzle body 40 without creating any gap.

In this manner, the channels MS and SS (see FIG. 5) are formed between the bottom portion 41a of the first nozzle body 40 and the plane portion 72 of the second nozzle body 70. In other words, by integrating the first nozzle body 40 from which the channel-forming projections 41c are omitted and the second nozzle body 70, a nozzle (not illustrated) identical in shape with the nozzle 30 of the first embodiment is formed.

The nozzle of the second embodiment configured in the above manner achieves the same effect as achieved by the nozzle of the first embodiment.

The present invention is not limited to the first and second embodiments and it is needless to say that various modifications of can be made within the scope of the claims. For example, according to the first and second embodiments, the molten resin MR is supplied to the substantially annular slot G (see FIGs. 6A and 6B) between the first nozzle body 40 and the second nozzle body 50 (70) to bond both nozzle bodies together. The present invention, however, is not limited to this configuration. The periphery of the slot G between the first nozzle body 40 and the second nozzle body 50 (70) may be bonded by other bonding means, such as an adhesive, ultrasonic welding, and hot-melt welding.

According to the first and second embodiments, the opposed wall is described as the close-contact wall 51 closely attached to the side wall 41b. The opposed wall is formed as a wall with a partial gap created between the wall and the side wall 41b. In this case, work of fitting the second nozzle body in the first nozzle body can be made easier. Because the molten resin MR making up the sealing portion 60 (see FIGs. 6A and 6B) flows into the gap formed between the first nozzle body and the second nozzle body, the sealing performance is not impaired in this case.

According to the first and second embodiments, the front end side of the channel-forming projections 41c (71) is closely attached to the abutting plane 52 (bottom portion 41a) to form the channels MS and SS. The present invention, however, is not limited to this configuration. A plate member softer than the first nozzle body 40 and the second nozzle body 50 (70) may be interposed between the front end side of the channel-forming projections 41c (71) and the abutting plane 52 (bottom portion 41a). This improves the sealing performance. In this case, the channel-forming projections 41c of the first nozzle body 40 or the channel-forming projections 71 of the second nozzle body 70 may be omitted and channel-forming projections may be formed integrally on the plate member. This facilitates molding of the first nozzle body 40 and the second nozzle body 50 (70).

According to the first and second embodiments, the washer nozzle 14 is used in a device that washes the front glass 11 of the vehicle 10. The washer nozzle 14 of the present invention, however, is not limited to this usage. The washer nozzle 14 may be applied to devices that wash the rear glass of the vehicle 10, windshields of airplanes, railroad cars, etc.

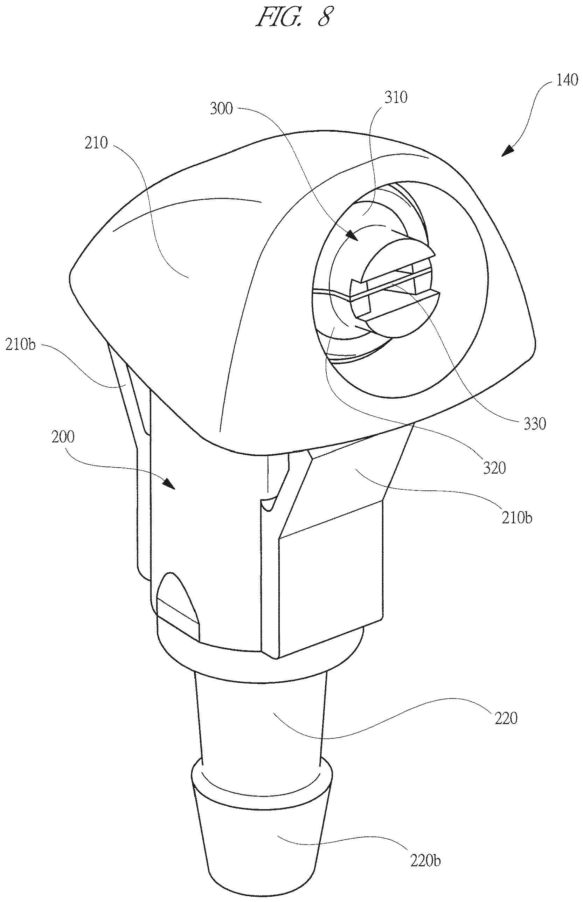

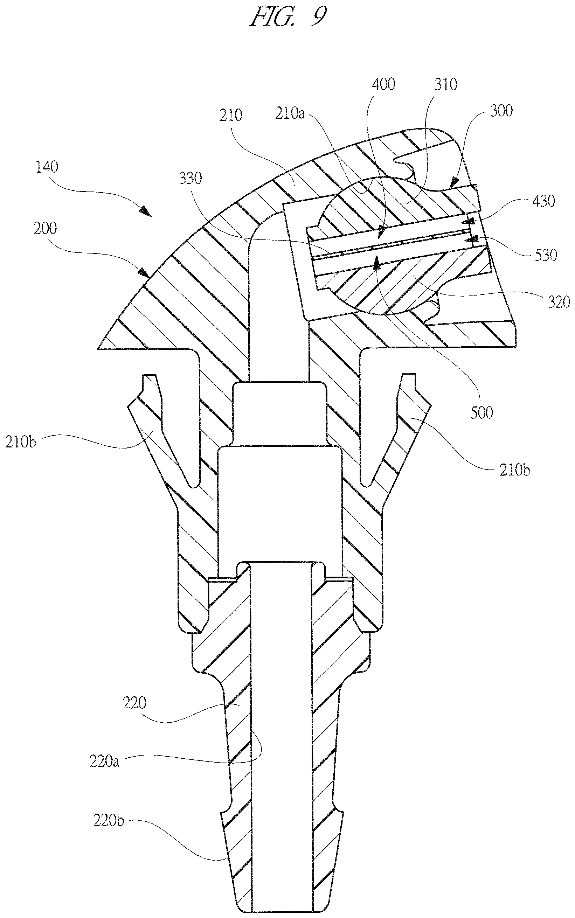

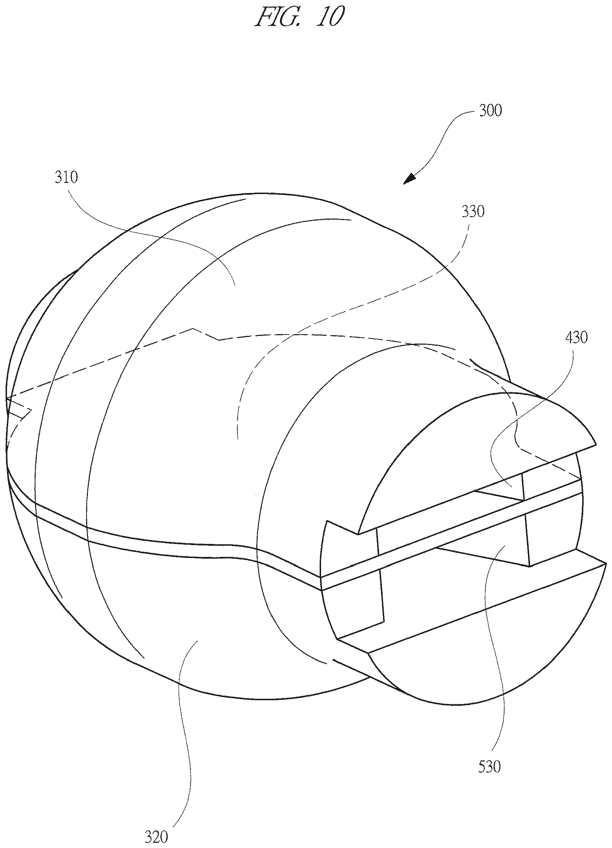

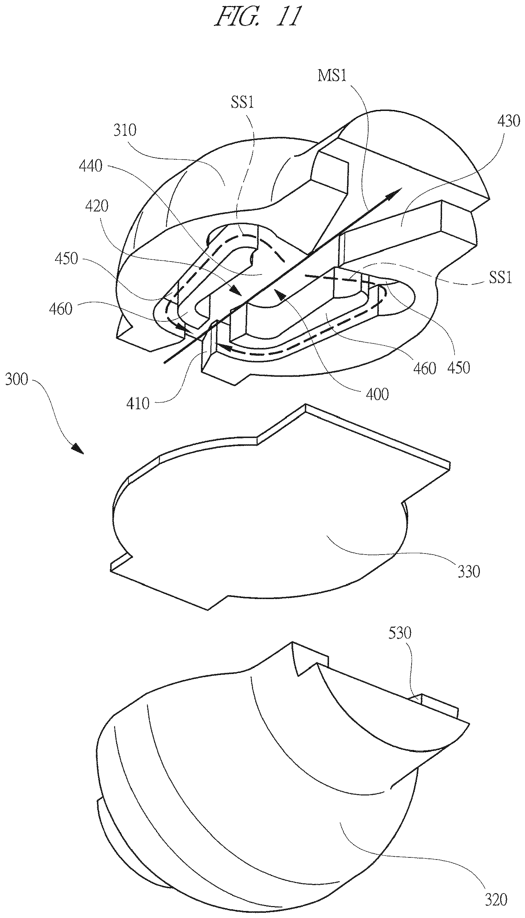

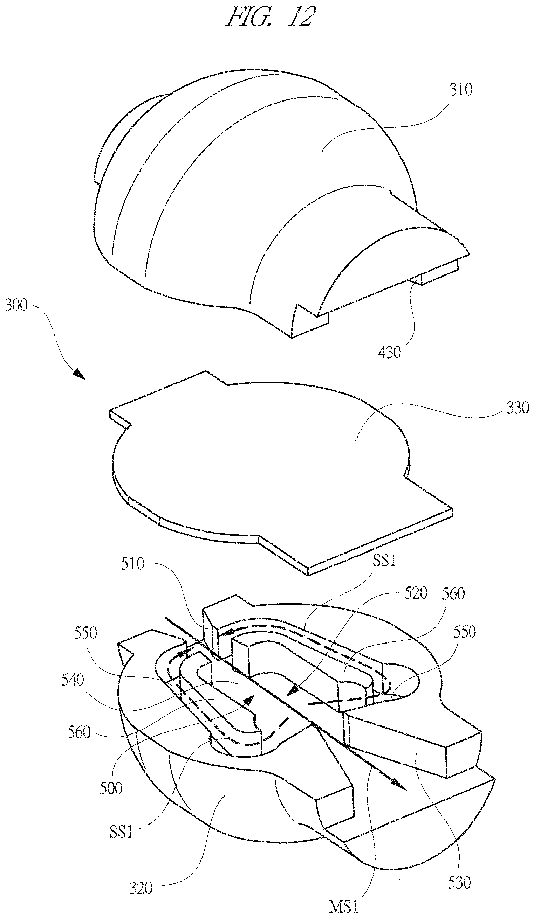

Next, a third embodiment will then be described in detail with reference to the drawings. FIG. 8 is an enlarged perspective view of a washer nozzle according to a third embodiment, FIG 9 is a sectional view of the washer nozzle of FIG 8, FIG 10 is an enlarged perspective view of a single nozzle of FIG 9, FIG 11 is an exploded perspective view of the nozzle of FIG 10 seen from below, and FIG 12 is an exploded perspective view of the nozzle of FIG 10 seen from above.

As shown in FIGs. 8 and 9, a washer nozzle 140 of the third embodiment includes a nozzle holding member 200 and a nozzle 300 each of which is molded out of a resin material, such as plastic, into a given shape.

The nozzle holding member 200 has a head 210 and a leg 220, which are fixed together into an integral structure. The head 210 has a mounting recess 210a which is open toward the front glass 11 when the washer nozzle 140 is fixed to the hood 10a (see FIG. 1) and in which the nozzle 300 is mounted. The interior of the mounting recess 210a is formed into a spherical shape so that the spherical nozzle 300 is held rotatably in the recess 210a.

The leg 220 is formed into a cylindrical shape, and a flow channel 220a through which the washer solution flows is formed inside the leg 220. One end of the flow channel 220a (upper side in FIG. 9) is connected to the mounting recess 210a of the head 210. The washer solution flowing through the flow channel 220a is lead to the nozzle 300 fitted in the mounting recess 210a.

On the other end of the leg 220 (lower side in FIG. 9), a tapered shoulder 220b, to which one end of a hose is connected, is formed integrally. The tapered shoulder 220b prevents the hose from slipping off. On a part of the head 210 closer to the leg 220, a pair of engaging claws 210b are formed integrally. The engaging claws 210b are elastically deformed and are inserted through mounting holes (not illustrated) on the hood 10a to fix the nozzle holding member 200 (washer nozzle 140) to the hood 10a.

As shown in FIGs. 10 to 12, the nozzle 300 has a first nozzle body 310 and a second nozzle body 320 each of which is formed into the same hemispherical shape. A plate-like partition member 330 is disposed between the first nozzle body 310 and the second nozzle body 320. The nozzle 300 is formed into a spherical shape by abutting the first nozzle body 310 and second nozzle body 320 against each other via the partition member 330 and fitting both nozzle bodies together. Each of the nozzle bodies 310 and 320 and the partition member 330 is molded out of a resin material, such as plastic, into a given shape.

As shown in FIG. 9, the spherical nozzle 300 is pushed with predetermined pressure toward the mounting recess 210a and is fitted therein. The nozzle 300 fitted in the mounting recess 210a can be rotated therein. Through this rotation, the tilt angle of the nozzle 300 against the nozzle holing member 200 is adjusted, that is, the jet position of the nozzle 300 for jetting the washer solution onto the front glass 11 (see FIG. 1) is adjusted.

Inside the nozzle 300, as shown in FIGs. 11 and 12, a first channel 400 and a second channel 500, each allowing the washer solution to flow therethrough, are formed on both sides across the partition member 300. The first channel 400 is formed on the first nozzle body 310 side with respect to the partition member 330, while the second channel 500 is formed on the second nozzle body 320 side with respect to the partition member 330.

The first channel 400 is composed of a first inlet portion 410 and a first self-vibrating channel 420. A first jet port 430 that jets the washer solution is connected to the first self-vibrating channel 420 of the first channel 400. The first channel 400 and the first jet port 430 are located between the first nozzle body 310 and the partition member 330. The second channel 500 is composed of a second inlet portion 510 and a second self-vibrating channel 520. A second jet port 530 that jets the washer solution is connected to the second self-vibrating channel 520 of the second channel 500. The second channel 500 and the second jet port 530 are located between the second nozzle body 320 and the partition member 330.

The first jet port 430 is directed toward the upper side of the front glass 11, while the second jet port 530 is directed toward the lower side of the front glass 11. As a result, the washer solution jetted out of the first jet port 430 reaches the upper side of the front glass 11, while the washer solution jetted out of the second jet port 530 reaches the lower side of the front glass 11.

Each of the inlet portions 410 and 510 has an opening area on its exit side determined to be smaller than an opening area on its entrance side, so that a flow of the washer solution is squeezed at the exit side of each of the inlet portions 410 and 510. In other words, each of the inlet portions 410 and 510 increases the flow velocity of the washer solution heading toward each of the self-vibrating channels 420 and 520.

Each of the jet ports 430 and 530 has an opening area on its entrance side determined to be smaller than an opening area on its exit side, so that a flow of the washer solution is squeezed at the entrance side of each of the jet ports 430 and 530. In other words, each of the jet ports 430 and 530 increases the flow velocity of the washer solution jetted toward the front glass 11.

The self-vibrating channel 420 has a main channel 440 extending substantially straight between the inlet portion 410 and the jet port 430 and a pair of subchannels 450 facing each other across the main channel 440. Similarly, the self-vibrating channel 520 has a main channel 540 extending substantially straight between the inlet portion 510 and the jet port 530 and a pair of subchannels 550 facing each other across the main channel 540. The main channels 440 and 540 and the pairs of subchannels 450 and 550 are partitioned by pairs of walls 460 and 560, respectively. The walls 460 and 560 serve as channel-forming projections that form channels inside the nozzle 300.

The washer solution flowing through each of the inlet portions 410 and 510 into each of the self-vibrating channels 420 and 520 is split into a mainstream MS1 indicated by a continuous line arrow in FIGs. 11 and 12 and substreams SS1 indicated by broken line arrows in FIG 11 and 12. The split substreams SS1 travel back to the exit side of each of the inlet portions 410 and 510 (entrance side of each of the self-vibrating channels 420 and 520) and rejoin the mainstream MS1. Through this process, vibration (self-vibration) is given to the main stream MS1.

In this manner, the substreams SS1 are joined to the mainstream MS1, as feedback flows. This causes the washer solution jetted out of each of the jet portions 430 and 530 to vibrate. As a result, the washer solution jetted out of each of the jet portions 430 and 530 toward the front glass 11 spreads across a wide area. The mainstream MS1 on the first nozzle body 310 side and the mainstream MS1 on the second nozzle body 320 side are separated from each other via the partition member 330, and therefore do not affect each other. For example, one mainstream MS1 does not act on the other mainstream MS1 to attenuate it From each of the jet ports 430 and 530, therefore, the washer solution is jetted out in a powerful manner. This manner widens the spreading area of the washer solution in the vertical direction of the front glass 11.

Next, a manufacturing method of the washer nozzle 140 formed in the above-described manner will be described in detail with reference to the drawings.

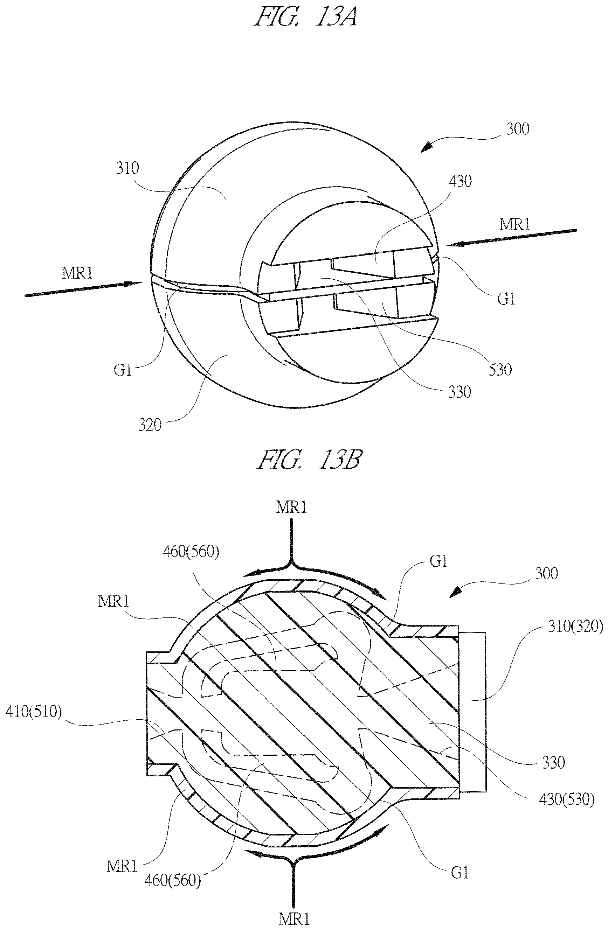

FIGs. 13A and 13B are explanatory diagrams for explaining a bonding process of bonding the nozzle of FIG 10.

### [Component Molding Process]

As shown in FIGs. 11 and 12, the first nozzle body 310, the second nozzle body 320, and the partition member 330 (components) are molded first In the process of molding the nozzle bodies 310 and 320 and the partition member 330, given dies (not illustrated) corresponding respectively to the nozzle bodies 310 and 320 and the partition member 330 are used and a molten resin is injected into the dies to mold the nozzle bodies 310 and 320 and the partition member 330 of given shapes (injection molding). Because the first and second nozzle bodies 310 and 320 are of the same shape, they can be molded using the same die.

### [Abutting Process]

Subsequently, the first nozzle body 310, second nozzle body 320, and partition member 330 molded by the component molding process are prepared. The channel 400 side of the nozzle body 310 and the channel 500 side of the nozzle body 320 are then set facing each other, and the partition member 330 is interposed between the nozzle body 310 and the nozzle body 320. Subsequently, the nozzle body 310 and the nozzle body 320 are moved closer to each other to hold the partition member 330 between them. As a result, the first channel 400 and the first jet port 430 are formed between the first nozzle body 310 and the partition member 330 and the second channel 500 and the second jet port 530 are formed between the second nozzle body 320 and the partition member 330. As a result of this abutting process, as shown in FIG 13A, a slot G1 is formed between the nozzle body 310 and the nozzle body 320 and around the outer periphery of the partition member 330 such that the slot G1 extends along the periphery of the nozzle 300.

### [Bonding Process]

Subsequently, the hot molten resin MR1 is supplied by a predetermined pressure from a pair of molten resin supply nozzles facing each other (not illustrated) into the slot G1 formed by the abutting process, as indicated by arrows. As a result, as indicated by arrows in FIG 13B, the molten resin MR1 flows deeper into the slot G1 to reach every part thereof, thus melting the part of nozzle bodies 310 and 320 and partition member 330 in contact with the molten resin MR1. As a result, the peripheries of the nozzle bodies 310 and 320 and partition member 330 in contact with the molten resin MR1 are systematically joined together via the molten resin MR1. The nozzle bodies 310 and 320 and the partition member 330 are thus firmly bonded to each other, which gives the completed form of the nozzle 300, as shown in FIG 10.

### [Mounting Process]

Subsequently, the nozzle 300 completed by the bonding process is prepared and the nozzle holding member 200 assembled by a separate process is also prepared. As shown in FIG 9, the nozzle 300 is pushed with a predetermined pressure to fit (mount) it in the mounting recess 210a of the nozzle holding member 200. The nozzle 300 is fitted in such that the jet ports 430 and 530 are directed to the opening of the mounting recess 210a. At the same time, the first nozzle body 310 is located on the upper side (opposite to the leg 220 side) and the second nozzle body 320 is located on the lower side (close to the leg 220 side), as shown in FIG 8. In this manner, the washer nozzle 140 is completed.

As described above in detail, according to the third embodiment, the nozzle 300 is composed of the first nozzle body 310 and the second nozzle body 320. The partition member 330 is disposed between the first nozzle body 310 and the second nozzle body 320. The first channel 400 allowing the washer solution to flow therethrough and the first jet port 430 that jets the washer solution are formed between the first nozzle body 310 and the partition member 330, while the second channel 500 allowing the washer solution to flow therethrough and the second jet port 530 that jets the washer solution are formed between the second nozzle body 320 and the partition member 330.

In this manner, a flow of the washer solution is split into a split flow of the solution flowing through the first channel 400 and a split flow of the solution flowing through the second channel 500 with respect to the partition member 330 so that the washer solution can be jetted out of the first jet port 430 and the second jet port 530 corresponding to the channels 400 and 500, respectively. For example, by directing the first jet port 430 toward the vertical upper side of the front glass 11 and the second jet port 530 toward the vertical lower side of the front glass 11, the spreading area of the washer solution is widened further in the vertical direction of the front glass 11. Hence the washer nozzle 140 can be applied to a large front glass.

According to the third embodiment, the pairs of walls 460 and 560 forming the channels 400 and 500 are formed integrally inside the nozzle bodies 310 and 320, respectively. By abutting the nozzle bodies 310 and 320 against the partition member 330, therefore, the channels 400 and 500 are formed inside the nozzle bodies 310 and 320, respectively. This saves trouble of preparing and assembling separate members for forming the channels 400 and 500, thereby improves the workability of assembling of the washer nozzle 140.

Next, a fourth embodiment will be described in detail with reference to the drawings. The components same as the components described in the third embodiment in terms of function are denoted by the same reference numerals and further descriptions thereof will be omitted.

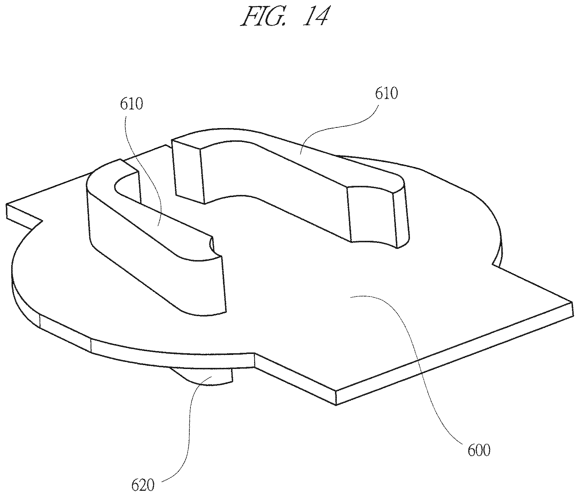

FIG 14 is a perspective view of a partition member of a nozzle according to a fourth embodiment

The fourth embodiment is different from the third embodiment in that the pairs of walls 460 and 560 of the nozzle bodies 310 and 320 (see FIGs. 11 and 12) are omitted and that, as shown in FIG 14, pairs of walls 610 and 620 identical in shape with the pairs of walls 460 and 560 are formed integrally on a partition member 600 such that the pair of walls 610 on the upper surface of the partition member 600 faces the pair of walls 620 on the lower surface of the partition member 600. The pair of walls 610 extend into the first nozzle body 310 to form the first channel 400 (see FIG 11), while the pair of walls 620 extend into the second nozzle body 320 to form the second channel 500 (see FIG 12). In other words, by joining together the nozzle bodies 310 and 320, from which the pairs of walls 460 and 560 are omitted, and the partition member 600, a nozzle (not illustrated) identical in shape with the nozzle 300 of the third embodiment is formed.

The nozzle of the fourth embodiment configured in the above-described manner achieves the same effect as achieved by the nozzle of the third embodiment

According to the third and fourth embodiments, the first nozzle body 310, the second nozzle body 320, and the partition member 330 (600) are bonded together by supplying the molten resin MR1 to the slot G1 (see FIG. 13). The bonding method is not limited to this. The first nozzle body 310, the second nozzle body 320, and the partition member 330 (600) may be bonded together by other bonding methods, such as bonding using an adhesive, ultrasonic welding, and hot-melt welding.

According to the third and fourth embodiments, the pairs of walls 460 and 560 are formed in the nozzle bodies 310 and 320, respectively (third embodiment), and the pairs of walls 610 and 620 are formed on both surfaces of the partition member 600 (fourth embodiment), respectively. The method of forming the walls is not limited to this. One pair of walls may be formed on one nozzle body while the other pair of walls may be formed on one surface of the partition member, and such nozzle body and partition member may be assembled and bonded together.

According to the third and fourth embodiments, the washer nozzle 140 is applied to a device that washes the front glass 11 (see FIG 1) of the vehicle 10. The washer nozzle 140, however, is not limited to this application. The washer nozzle 140 may be applied to devices that wash the rear glass of the vehicle 10, windshields of airplanes, railroad cars, etc.

### INDUSTRIAL APPLICABILITY

The washer nozzle jets the washer solution (washer fluid) through the operation of a pump making up a washer device and washes dirt, such as dust, away from the surface of a windshield (surface to be washed).

## Claims

1. A washer nozzle (14) including a nozzle (30) that jets a washer fluid toward a surface (11) to be washed and a nozzle holding member (20) that holds the nozzle,
wherein the washer nozzle (14) comprises:
a first nozzle body (40) forming the nozzle and including a fitting recess (FC) having a bottom portion (41a) and a side wall (41b);
a second nozzle body (50) having an opposed wall (51) in close contact with the side wall (41b), and a back face facing the bottom portion (41a), the second nozzle body (50) being fitted in the fitting recess (FC) so that the first and second nozzle bodies (40, 50) collectively form the nozzle;
a channel (MS, SS) formed between the bottom portion 41a) of the first nozzle body (40) and the back face of the second nozzle body (50), body, the channel (MS, SS) allowing the washer fluid to flow therethrough; and **characterised by**
a sealing portion (60) formed between an opening-side edge portion (44) of the fitting recess (FC) of the first nozzle body (40) and the opposed wall of the second nozzle body (50), the sealing portion (60) sealing a gap between the first nozzle body (40) and a spherical surface (53) of the second nozzle body (50).

2. The washer nozzle according to claim 1, wherein the sealing portion (60) is continuously formed along a periphery of the nozzle.

3. A manufacturing method of a washer nozzle (14) including a nozzle (30) that jets a washer fluid toward a surface (11) to be washed and a nozzle holding member (20) that holds the nozzle, wherein the manufacturing method comprises:
a fitting step of preparing a first nozzle body (40) including a fitting recess (FC) having a bottom portion (41a) and a side wall (41b) and a second nozzle body (50) having an opposed wall (51b) facing the side wall (41b) and a back face facing the bottom portion (41a) and fitting the second nozzle body (50) in the fitting recess (FC) to form a channel (MS, SS) allowing the washer fluid to flow therethrough between the bottom portion (41a) of the first nozzle body (40) and the back face of the second nozzle body; and **characterised by**
a sealing step of supplying a sealing member to a gap between an opening-side edge portion (44) of the fitting recess (FC) of the first nozzle body (40) and the opposed wall of the second nozzle body (40) to form a sealing portion (60) between the first nozzle body (40) and a spherical surface (53) of the second nozzle body (50); and
a mounting step of fitting the nozzle (30) completed by the sealing process in a mounting recess (21a) formed in the nozzle holding member (20).

4. The manufacturing method of a washer nozzle according to claim 3, wherein the sealing portion (60) is continuously formed along a periphery of the nozzle.

## Patentansprüche

1. Waschdüse (14), die eine Düse (30), die ein Waschfluid zu einer zu waschenden Fläche (11) ausstößt, und ein Düsenhalteelement (20) aufweist, das die Düse hält, wobei die Waschdüse (14) umfasst:
einen ersten Düsenkörper (40), der die Düse bildet und eine Befestigungsausnehmung (FC) aufweist, die einen Bodenabschnitt (41a) und eine Seitenwand (41b) aufweist;
einen zweiten Düsenkörper (50), der eine gegenüberliegende Wand (51) in engem Kontakt mit der Seitenwand (41b) sowie eine Rückseite aufweist, die zu dem Bodenabschnitt (41a) weist, wobei der zweite Düsenkörper (50) in der Befestigungsausnehmung (FC) befestigt ist, so dass der erste und zweite Düsenkörper (40, 50) gemeinsam die Düse bilden;
einen Kanal (MS, SS), der zwischen dem Bodenabschnitt (41a) des ersten Düsenkörpers (40) und der Rückseite des zweiten Düsenkörpers (50) gebildet ist, wobei der Kanal (MS, SS) eine Strömung des Waschfluides hindurch zulässt; und **gekennzeichnet durch**
einen Dichtungsabschnitt (60), der zwischen einem öffnungsseitigen Randabschnitt (44) der Befestigungsausnehmung (FC) des ersten Düsenkörpers (40) und der gegenüberliegenden Wand des zweiten Düsenkörpers (50) gebildet ist, wobei der Dichtungsabschnitt (60) einen Spalt zwischen dem ersten Düsenkörper (40) und einer Kugelfläche (53) des zweiten Düsenkörpers (50) abdichtet.

2. Waschdüse nach Anspruch 1, wobei der Dichtungsabschnitt (60) kontinuierlich entlang eines Umfangs der Düse gebildet ist.

3. Herstellverfahren für eine Waschdüse (14), die eine Düse (30), die Waschfluid zu einer zu waschenden Fläche (11) ausstößt, und ein Düsenhalteelement (20) aufweist, das die Düse hält, wobei das Herstellverfahren umfasst:
einen Befestigungsschritt zum Herstellen eines ersten Düsenkörpers (40), der eine Befestigungsausnehmung (FC) aufweist, die einen Bodenabschnitt (41a) und eine Seitenwand (41b) aufweist, sowie eines zweiten Düsenkörpers (50), der eine gegenüberliegende Wand (51b), die zu der Seitenwand (41b) weist, und eine Rückseite aufweist, die zu dem Bodenabschnitt (41a) weist, und zum Befestigen des zweiten Düsenkörpers (50) in der Befestigungsausnehmung (FC), um einen Kanal (MS, SS) zu bilden, der eine Strömung des Waschfluides hindurch zwischen dem Bodenabschnitt (41a) des ersten Düsenkörpers (40) und der Rückseite des zweiten Düsenkörpers zulässt, und **gekennzeichnet durch**
einen Dichtungsschritt zum Liefern eines Dichtungselements an einen Spalt zwischen einem öffnungsseitigen Randabschnitt (44) der Befestigungsausnehmung (FC) des ersten Düsenkörpers (40) und der gegenüberliegenden Wand des zweiten Düsenkörpers (40), um einen Dichtungsabschnitt (60) zwischen dem ersten Düsenkörper (40) und einer Kugelfläche (53) des zweiten Düsenkörpers (50) zu bilden; und
einen Montageschritt zum Befestigen der Düse (30), die durch den Dichtungsprozess vervollständigt ist, in einer Montageausnehmung (21a), die in dem Düsenhalteelement (20) gebildet ist.

4. Herstellverfahren einer Waschdüse nach Anspruch 3, wobei der Dichtungsabschnitt (60) kontinuierlich entlang eines Umfangs der Düse geformt ist.

## Revendications

1. Gicleur de lave-glace (14) incluant un gicleur (30) qui projette un fluide de lavage vers une surface (11) qu'il s'agit de laver et un élément de maintien de gicleur (20) qui maintient le gicleur,
dans lequel le gicleur de lave-glace (14) comprend :
un premier corps de gicleur (40) formant le gicleur et incluant un évidement d'engagement (FC) ayant une portion de fond (41a) et une paroi latérale (41b) ;
un second corps de gicleur (50) ayant une paroi opposée (51) en contact intime avec la paroi latérale (41b), et une face dorsale en face de la portion de fond (41a),
le second corps de gicleur (50) étant engagé dans l'évidement d'engagement (FC) de telle façon que le premier et le second corps de gicleur (40, 50) forment collectivement le gicleur ;
un canal (MS, SS) formé entre la portion de fond (41a) du premier corps de gicleur (40) et la face dorsale du second corps de gicleur (50), le canal (MS, SS) permettant au fluide de lavage de s'écouler à travers lui-même ; et
**caractérisé par**
une portion d'étanchement (60) formée entre une portion de bordure côté ouverture (44) de l'évidement d'engagement (FC) du premier corps de gicleur (40) et la paroi opposée du second corps de gicleur (50), la portion d'étanchement (60) étanchant un intervalle entre le premier corps de gicleur (40) et une surface sphérique (53) du second corps de gicleur (50).

2. Gicleur d'essuie-glace selon la revendication 1, dans lequel la portion d'étanchement (60) est formée en continu le long d'une périphérie du gicleur.

3. Procédé de fabrication d'un gicleur d'essuie-glace (14) incluant un gicleur (30) qui projette un fluide de lavage vers une surface (11) qu'il s'agit de laver et un élément de maintien de gicleur (20) qui maintient le gicleur, dans lequel le procédé de fabrication comprend :
une étape d'engagement consistant à préparer un premier corps de gicleur (40) incluant un évidement d'engagement (FC) ayant une portion de fond (41a) et une paroi latérale (41b) et un second corps de gicleur (50) ayant une paroi opposée (51b) en face de la paroi latérale (41b) et une face dorsale en face de la portion de fond (41a) et à engager le second corps de gicleur (50) dans l'évidement d'engagement (FC) pour former un canal (MS, SS) permettant au fluide de lavage de s'écouler à travers lui-même entre la portion de fond (41a) du premier corps de gicleur (40) et la face dorsale du second corps de gicleur, et
**caractérisé par**
une étape d'étanchement consistant à fournir un élément d'étanchement dans un intervalle entre une portion de bordure côté ouverture (44) de l'évidement d'engagement (FC) du premier corps de gicleur (40) et la paroi opposée du second corps de gicleur (40) pour former une portion d'étanchement (60) entre le premier corps de gicleur (40) et une surface sphérique (53) du second corps de gicleur (50) ; et
une étape de montage consistant à engager le gicleur (30) achevé par le processus d'étanchement dans un évidement de montage (21a) formé dans l'élément de maintien de gicleur (20).

4. Procédé de fabrication d'un gicleur d'essuie-glace selon la revendication 3, dans lequel
la portion d'étanchement (60) est formée en continu le long d'une périphérie du gicleur.
